# EUROPEAN PATENT APPLICATION

(11) **EP 4 155 048 A1**
(43) Date of publication of application: **29.03.2023**
(21) Application number: 21808489.5
(22) Date of filing: 12.05.2021
(51) Int. Cl.: B29C 45/14, B29C 45/16

(54) **INSERT MOLDING CONTAINER AND PRODUCTION METHOD FOR SAME**

(30) Priority: 20.05.2020 JP 2020087884
(71) Applicant: M.F.V. Co., Ltd, Higashi-Osaka-shi, Osaka 577-0834 (JP)
(72) Inventor: YAMANAKA Yasuhiro, Osaka-shi, Osaka 577-0834 (JP); YAMAMOTO Hiroyuki, Osaka-shi, Osaka 577-0834 (JP)
(74) Representative: Hering, Hartmut
(86) International application number: PCT/JP2021/018092
(87) International publication number: WO 2021/235295

(57) **Abstract**

Provided are an insert molding container (1) that prevents peeling of a surface coating layer (6) caused by heat or pressure of a molten material (17) at the time of secondary molding injection and that is capable of improving external appearance, the surface coating layer being formed on an outer surface of a primary container (2); and a method of producing the same.

An insert molding container (1) of the present invention has a primary container (2) that is formed with a bottomed cylinder shape and that is used as an insert material; a surface coating layer (6) that is formed by surface treatment and that covers an outer surface of the primary container (2); a surface protection material (7) that is disposed on the surface coating layer (6) and that protects the surface coating layer (6); and a secondary container (5) that integrally covers from an outer side the primary container (2) whose outer surface is provided with the surface coating layer (6) and the surface protection material (7), and that is formed by injecting a molten material (17) toward the surface protection material (7).

## Description

### Technical Field

The present invention relates to an insert molding container that includes a secondary container and that is produced by injection molding, and to a method of producing the same, the secondary container accommodating a primary container, covering an outer surface of the primary container, and being integrally formed therewith.

### Background Art

In general, an insert molding container including a primary container that has an open upper side and that has a bottomed cylinder shape, and a secondary container that covers an outer surface of the primary container and that is integrally formed therewith is known. That is, the insert molding container is a member that has a multi-wall structure, such as a double wall structure, a triple wall structure, or a quadruple wall structure, having a wide-mouth bottle shape or narrow-mouth bottle shape and being thick, and that is produced by injection molding.

Examples of materials of the insert molding container include synthetic resin materials. In particular, a transparent synthetic resin material or a semitransparent synthetic resin material is often used. Such an insert molding container is used, for example, as a cosmetic material container that accommodates, as a content, a semisolid cosmetic material or a cosmetic material in paste form.

With regard to the cosmetic material container, surface treatment that makes an outer surface of a primary container glossy is performed and a transparent secondary container is formed over the outer surface of the primary container, to thereby provide the entire container with a gloss providing transparency and to thus allow the container to convey a sense of high quality and to have designability, as a result of which such a container is, as an excellent cosmetic material product, differentiated from other products.

As a technology of producing an insert molding container, there is, for example, a technology disclosed in PTL 1.

An object of PTL 1 is to provide an insert molding container having a better appearance as a result of preventing a vapor deposition layer on a primary container from peeling.

Specifically, an insert-molding-container producing method having a cover attaching step of attaching a cover member made of transparent synthetic resin to an outer surface, where a vapor deposition layer is provided, of a primary container, a disposing step of disposing the primary container inside a die with the cover member opposing a gate, and an insert molding step of injecting a transparent synthetic resin material from the gate is performed to thereby produce an insert molding container in which a secondary container made of transparent synthetic resin is integrally provided with an outer side of the primary container, the secondary container has a gate mark, and the vapor deposition layer is provided on the outer surface of the primary container in a region of the vicinity of the gate mark.

### Citation List

### Patent Literature

PTL 1: Japanese Unexamined Patent Application Publication No. 2019-025811

### Summary of Invention

### Technical Problem

As also described above, in producing an insert molding container as a cosmetic material container, in order to further improve external appearance, an outer surface of a primary container is provided with a glossy surface coating layer and a transparent secondary container is formed thereon by injection molding. Note that examples of a surface treatment method include vapor deposition, coating, and plating.

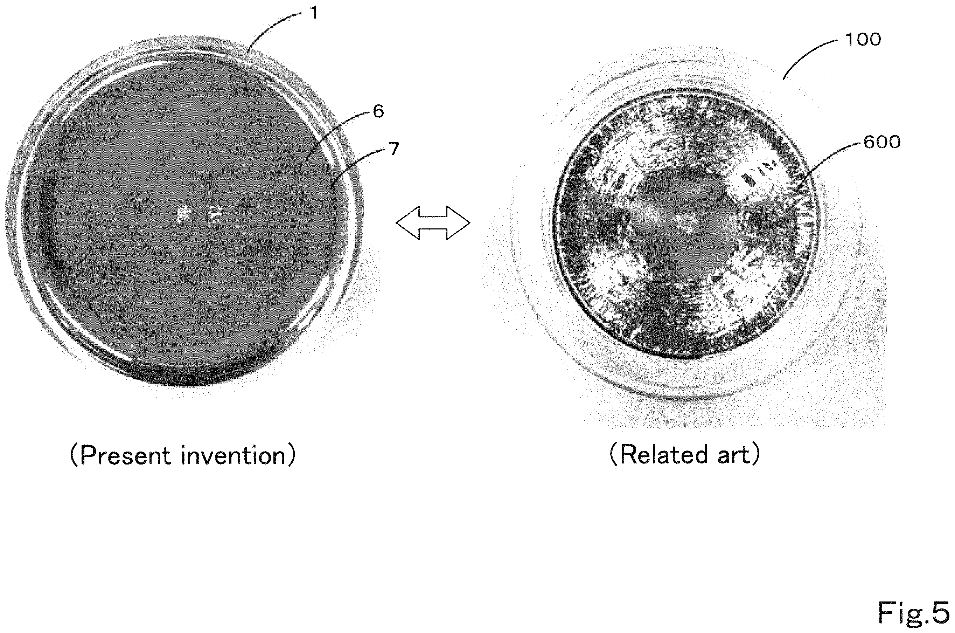

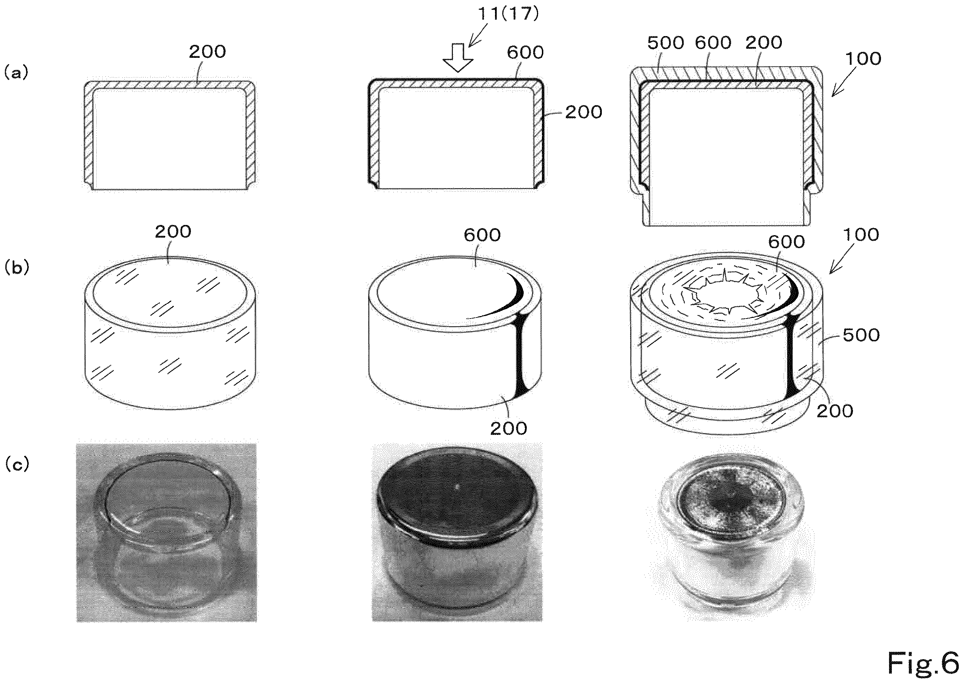

However, as shown in the right illustration of FIG. 5 and the lower right illustration of FIG. 6, when a primary container 200 that is provided with a surface coating layer is used as an insert material to perform insert molding (forming of a secondary container 500) to inject a molten synthetic resin material 17 into a die that accommodates the primary container 200 from a gate 11, due to heat or pressure of the molten material 17, a synthetic resin material 17 on an outer surface of the primary container 200 in a region of the vicinity of the gate 11 is melted, and, together with a surface coating layer 600, flows in a direction away from the gate 11. In such a situation, a portion, where a vapor deposition layer (surface coating layer 600) is peeled in the region of the vicinity of the gate 11, of the primary container 200 is produced, as a result of which the external appearance of an insert molding container 100 is greatly marred.

That is, at the time of secondary molding injection, heat or pressure of the molten synthetic resin material 17 melts and peels the surface coating layer 600 formed on the outer surface of the primary container 200 by surface treatment, even though the surface coating layer 600 is a strong layer.

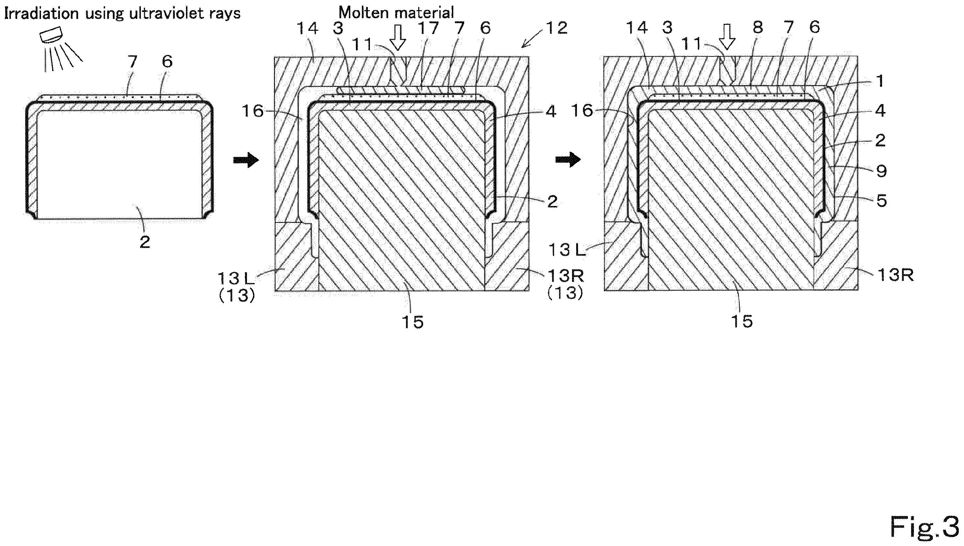

In PTL 1, the vapor deposition layer (surface coating layer) formed on the outer surface of the primary container by surface treatment is protected by using a cover member. The cover member is formed with a stopper shape, and is attached so as to be inserted into a hole portion of the primary container. The cover member is melted by a synthetic resin material that has melted at the time the secondary molding injection, and covers the vapor deposition layer on the primary container (see, for example, paragraphs[0049] to [0057] and FIGs. 3 to 7) . The cover member is made of a synthetic resin material that is of the same type as the synthetic resin material that forms the secondary container (see, for example, paragraph [0056]).

However, in PTL 1, since the cover member is made of a material that is of the same type as the synthetic resin material that forms the secondary container, the cover member may melt and become hot at the time of the secondary molding injection, and, thus, heat or pressure thereof peels the vapor deposition layer formed on the outer surface of the primary container. That is, in the technology of PTL 1, the problem that the surface coating layer peels at the time of the secondary molding injection is thought of as not being solved.

The technology of PTL 1 has the following problems.

A dedicated die for producing a stopper member serving as a source of the cover member is separately required. That is, the number of steps is increased. The position of the gate (inlet) into which the molten synthetic resin material is injected is limited (only a bottom portion of the primary container). The shape of the die is limited. Since the hole portion for positioning the stopper member is formed in the center of the bottom portion of the primary container, the external appearance of the insert molding container after the molding deteriorates. Since the stopper member serving as the source of the cover member is made of a material that is of the same type as the secondary container on the outer side, the stopper member assimilates to the secondary container by heat or the like, but does not assimilate to the primary container on the inner side. Therefore, a gap is formed between the secondary container and the primary container, though the stopper member or the cover member needs to precisely match the external shape of the primary container.

Accordingly, in view of the problems above, it is an object of the present invention to provide an insert molding container that prevents peeling of a surface coating layer caused by heat or pressure of a molten material at the time of secondary molding injection and that is capable of improving external appearance, the surface coating layer being formed on an outer surface of a primary container; and to provide a method of producing the same.

### Solution to Problem

To this end, the present invention provides the following technical means.

An insert molding container according to the present invention includes a primary container that is formed with a bottomed cylinder shape and that is used as an insert material; a surface coating layer that is formed by surface treatment and that covers an outer surface of the primary container; a surface protection material that is disposed on the surface coating layer and that protects the surface coating layer; and a secondary container that integrally covers from an outer side the primary container whose outer surface is provided with the surface coating layer and the surface protection material, and that is formed by injecting a molten material toward the surface protection material.

Preferably, the surface protection material is disposed at a position opposing a gate into which the molten material for forming the secondary container is injected.

Preferably, the surface protection material includes a material that is cured before molding the secondary container.

Preferably, the surface protection material is a material that is capable of suppressing a temperature of the molten material injected for forming the secondary container from being transferred to the primary container.

Preferably, the surface protection material is a gel material provided along the shape of the primary container before curing.

Preferably, the surface protection material is disposed at least at a position opposing the gate so as to be situated on the surface coating layer formed on a bottom-portion outer wall of the primary container. However, it is desirable that the protection member basically be transparent and allow toning in accordance with the design.

A method of producing an insert molding container is a method of producing an insert molding container having a primary container that has a bottomed cylinder shape and a secondary container that integrally covers an outer surface of the primary container; and includes a primary molding step of forming the primary container; a surface treatment step of forming a surface coating layer on the outer surface of the primary container; a protection material forming step of providing the surface protection material on the surface coating layer formed on the primary container, the surface protection material protecting the surface coating layer for thermal insulation when forming the secondary container; and a secondary molding step of integrally forming the secondary container by inserting the primary container provided with the surface protection material into a molding die and by injecting a molten material between the molding die and the outer surface of the primary container, in which, in the secondary molding step, the molten material is injected toward the surface protection material provided at the primary container.

### Advantageous Effects of Invention

According to the insert molding container and the method of producing the same of the present invention, peeling of the surface coating layer caused by heat or pressure of the molten material at the time of secondary molding injection is prevented from occurring, and external appearance can be improved, the surface coating layer being formed on the outer surface of the primary container.

### Brief Description of Drawings

[FIG. 1] FIG. 1 schematically shows an insert molding container of the present invention.
[FIG. 2] FIG. 2 schematically shows illustrations of and show images of a method of producing the insert molding container of the present invention.
[FIG. 3] FIG. 3 schematically shows illustrations of a secondary molding step after a protection material forming step in the method of producing the insert molding container of the present invention.
[FIG. 4] FIG. 4 schematically shows a position of a gate into which a molten material is injected and a position at which a surface protection material is disposed.
[FIG. 5] FIG. 5 shows images of a comparison between a surface coating layer provided at the insert molding container of the present invention and a surface coating layer provided at an insert molding container of the related art.
[FIG. 6] FIG. 6 schematically shows illustrations of and show images of a method of producing an insert molding container of the related art.

### Description of Embodiments

An insert molding container 1 and a method of producing the same of an embodiment according to the present invention are described below with reference to the drawings.

Note that the embodiment described below is a specific example of the present invention, and the structure of the present invention is not limited by the specific example.

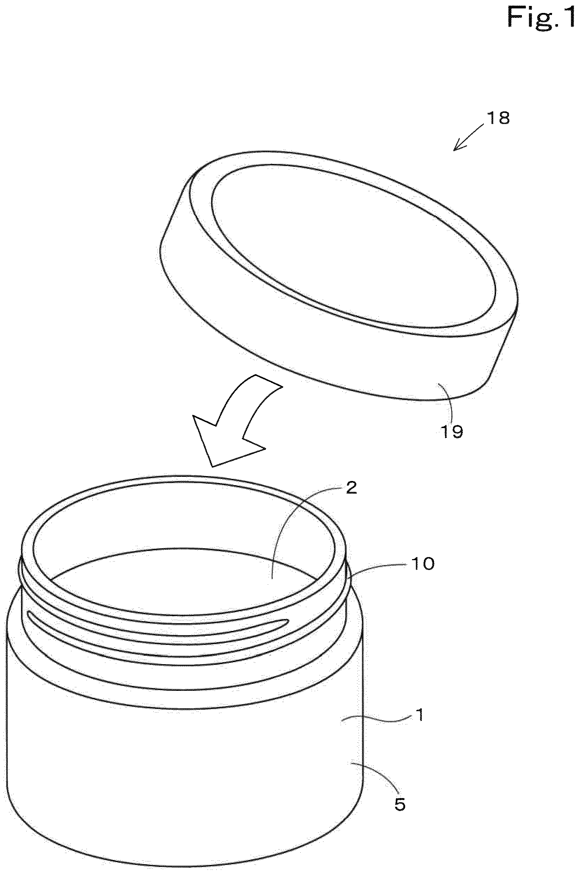

As shown in, for example, FIG. 1, the insert molding container 1 according to the present invention is described with a cosmetic material container 18 that accommodates a cosmetic material being taken as an example. The cosmetic material container 18 is a hermetically sealed container having a wide-mouth bottle shape and including an accommodation container 1 (body container) that accommodates, for example, a cosmetic material and a cover portion 19 that covers and hermetically seals an upper opening portion of the accommodation container 1. In the present embodiment, of these, the accommodation container 1 is taken as an example to describe the insert molding container 1. However, the technology of the present invention is also applicable to the cover portion 19.

The insert molding container 1 of the present embodiment has a primary container 2 that is formed with a bottomed cylinder shape and a secondary container 5 that covers an outer surface of the primary container 2 and that is integrally formed by injection molding. That is, the insert molding container 1 of the present embodiment is a member including a thick double wall structure that has a wide-mouth bottle shape and being produced by injection molding.

Examples of materials of the insert molding container 1 (the primary container 2 and the secondary container 5) include synthetic resin materials (such as PET resin). In particular, in the secondary container 5, a transparent synthetic resin material or a semitransparent synthetic resin material is often used. Here, in the present embodiment, a synthetic resin material (transparent or colored) is used for the primary container 2, and a transparent synthetic resin material 17 is used for the secondary container 5.

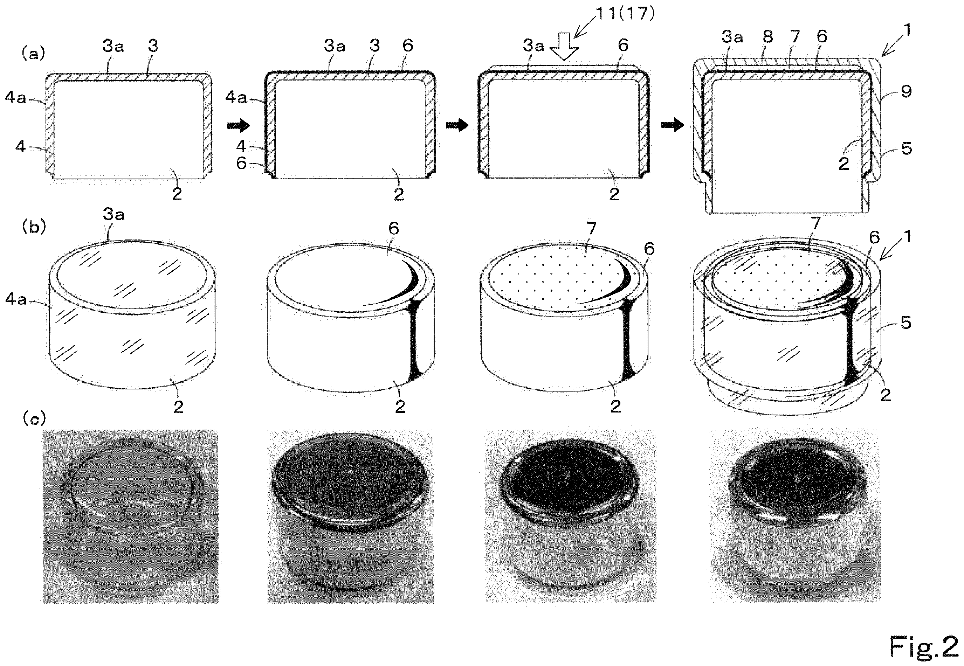

As shown in, for example, FIG. 2, the primary container 2 is a container having a bottom portion 3 and a cylindrical side wall portion 4 that is provided so as to surround the bottom portion 3, and having an open upper side. That is, the primary container 2 is a member having a bottomed cylinder shape or a bottomed prism shape. The primary container 2 of the present embodiment is a member formed with a bottomed cylinder shape and used as an insert material. Note that the primary container 2 may be a member formed by injection molding.

The primary container 2 of the present embodiment is a container formed with a wide-mouth bottle shape by injection molding using a synthetic resin material. The primary container 2 accommodates a semisolid cosmetic material or a cosmetic material in paste form. A circular recessed portion having a constant wideness and being shallow is formed in a bottom-portion outer wall 3a of the primary container 2. In the present embodiment, the depth of the recessed portion is about 0.5 mm.

Note that the bottom-portion outer wall 3a of the primary container 2 may be flat or may have a protruding portion instead of having a recessed portion. The bottom-portion outer wall 3a of the primary container 2 need not have a recessed portion having a constant depth, and may have a shape that allows the thickness of a surface protection material 7 to change so as to withstand heat and pressure of a molten material 17 at the time of secondary injection.

The primary container 2 is subjected to surface treatment for embellishing its outer surface. The surface treatment is performed for improving the external appearance of the cosmetic material container 18, and forms a surface coating layer 6 on the outer surface of the primary container 2. In the present embodiment, the outer surface of the primary container 2 is embellished by forming the surface coating layer 6 that is glossy by the surface treatment.

Note that examples of a surface treatment method include vapor deposition, coating, and plating. In the present embodiment, a vapor deposition device (such as a CVD device) is used to perform the surface treatment that forms the vapor deposition layer 6 that is glossy on the outer surface of the primary container 2. The vapor deposition layer 6 is formed on the bottom-portion outer wall 3a and a side-wall-portion outer wall 4a of the primary container 2. From the viewpoint of, for example, design, the vapor deposition layer 6 may be, for example, gold or silver that is glossy (glossy layer), or may be only colored.

As shown in, for example, FIGs. 2 and 3, in the present invention, the surface protection material 7 is disposed on the vapor deposition layer 6, and covers and protects the vapor deposition layer 6.

It is preferable that the position of the surface protection material 7 be a position opposing a gate 11 (inlet) into which the molten material 17 is injected when forming the secondary container 5 (when performing secondary injection molding). That is, it is preferable that the surface protection material 7 be disposed at an outer wall of the primary container 2 so as to be situated at an outer wall surface with which the molten material 17 that is injected from the gate 11 provided at a molding die 12 (die) initially comes into contact.

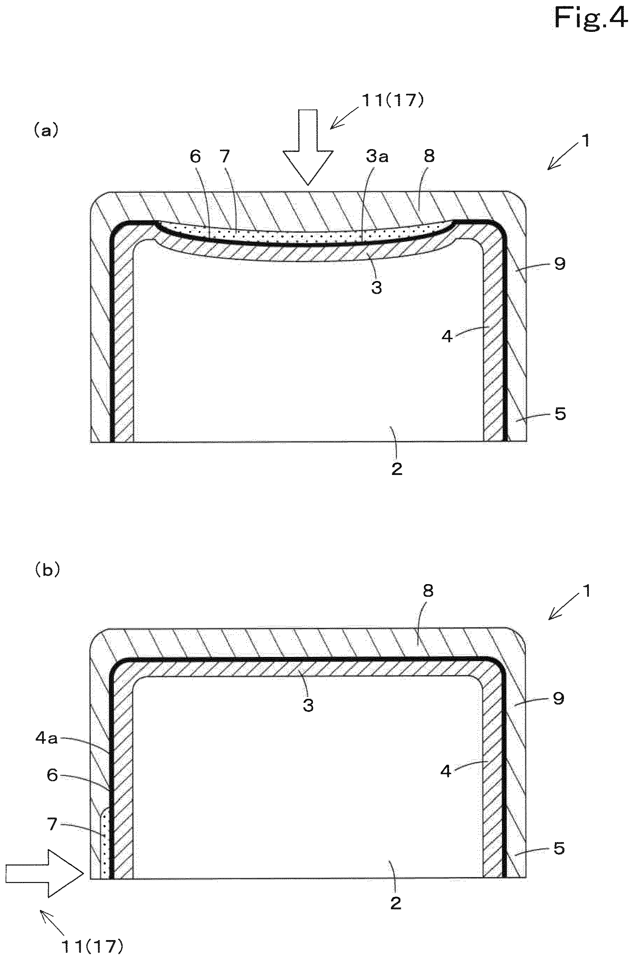

As shown in FIG. 4(a), in the present embodiment, the surface protection material 7 is disposed in (is applied to) the recessed portion of the bottom-portion outer wall 3a of the primary container 2.

That is, in the present embodiment, the surface protection material 7 is disposed at least at a position opposing the gate 11 so as to be situated on the vapor deposition layer 6 formed on the bottom-portion outer wall 3a of the primary container 2, and covers and protects the vapor deposition layer 6. However, the gate 11 is provided at a position opposing the bottom portion 3 of the primary container 2.

As shown in FIG. 4(b), for example, when the gate 11 is provided on a side, the surface protection material 7 is disposed on the vapor deposition layer 6 on the side-wall-portion outer wall 4a opposing the gate 11 situated beside the surface protection material 7. Note that, preferably, the surface protection material 7 is disposed only at a position opposing the gate 11 (inlet).

The surface protection material 7 is a gel material provided along the shape of the primary container 2 before curing. It is preferable that the surface protection material 7 be, for example, a fluid (having viscosity) or a semisolid in the form of cream (material having pliability/flexibility) so as to change into a solid (so as to be cured) by being irradiated with light or the like.

The surface protection material 7 is a material that is cured before molding the secondary container 5. That is, the surface protection material 7 is cured before injecting the molten material 17 (synthetic resin material) for the secondary container 5. Preferable examples of the surface protection material 7 include ultraviolet curable resin that is cured by being irradiated with ultraviolet rays (such as a UV adhesive or a UV resin) and thermosetting resin. In the present embodiment, ultraviolet curable resin is used as the surface protection material 7. Note that the ultraviolet curable resin 7 is transparent when cured and can maintain the brilliance of the vapor deposition layer 6 without affecting the vapor deposition layer 6.

Further, the surface protection material 7 is a material that is capable of suppressing the temperature of the molten material 17 injected for forming the secondary container 5 from being transferred to the primary container 2. The main purpose of the surface protection material 7 is to thermally insulate the vapor deposition layer 6 without affecting the vapor deposition layer 6. That is, when the molten synthetic resin material 17 (for example, PET resin) has been injected in forming the secondary container 5, the surface protection material 7 protects the vapor deposition layer 6 so that the surface of the primary container 2 is not melted by heat of the synthetic resin material 17, and prevents the vapor deposition layer 6 from being affected.

The surface protection material 7 is capable of suppressing the pressure of the injected synthetic resin material 17 and dispersing the pressure. Since the surface protection material 7 is a material having viscosity (pliability), the thickness of the surface protection material 7 can be made uniform. Note that it is preferable that the thickness of the surface protection material 7 be, for example, about 0.5 mm, which is the thickness of the recessed portion of the bottom portion 3 of the primary container 2. However, as exemplified above, the thickness of the surface protection material 7 is not limited to this thickness.

Since the surface protection material 7 is a material having viscosity (pliability), the surface protection material 7 easily flows when being applied. The surface protection material 7 is applied to the bottom-portion outer wall 3a of the primary container 2 at a location corresponding to the vicinity of the gate 11 (inlet) into which the molten material 17 having a high temperature is injected.

Since the surface protection material 7 is a material having viscosity (pliability), the surface protection material 7 can be provided along the recessed portion of the bottom-portion outer wall 3a of the primary container 2. That is, the surface protection material 7 is in surface-contact with and protects the vapor deposition layer 6.

It is desirable that the surface protection material 7 be capable of withstanding the temperature of the molten material 17 (synthetic resin material) injected at the time of secondary injection molding.

In this way, when the fluid surface protection material 7 is used, even if the primary container 2 has a complex shape, the coating can be formed in accordance with this shape. After forming the coating by the surface protection material 7 onto the vapor deposition layer 6, the surface protection material 7 is cured. For example, when the surface protection material 7 is an ultraviolet curable resin, the surface protection material 7 is cured by being irradiated with ultraviolet rays. The surface protection material 7 is cured and the primary container 2 protected by the vapor deposition layer 6 is used as an insert material to perform secondary injection molding.

Note that, in the present embodiment, although the surface protection material 7 is applied to the recessed portion of the bottom-portion outer wall 3a of the primary container 2, the surface protection material 7 can also be applied to various positions on the primary container 2. For example, when the gate 11 exists on a side, the surface protection material 7 may be applied to the vapor deposition layer 6 on the side-wall-portion outer wall 4a opposing the gate 11. Although, the surface protection material 7 is described as being a fluid, the surface protection material 7 may also be in the form of a sheet.

The secondary container 5 integrally covers from the outer side the primary container 2 whose outer surface is provided with the vapor deposition layer 6 and the surface protection material 7, and is formed by injecting the molten material 17 (synthetic resin material) for the secondary container 5 toward the surface protection material 7.

The secondary container 5 is a container having a bottom portion 8 and a cylindrical side wall portion 9 that is provided so as to surround the bottom portion 8, and having an open upper side. That is, the secondary container 5 is a member having a bottomed cylinder shape or a bottomed prism shape. The secondary container 5 of the present embodiment is a member having a bottomed cylinder shape.

The secondary container 5 is a container formed with a wide-mouth bottle shape by injection molding. The secondary container 5 is integrally formed so as to cover the outer surface (the bottom portion 3 and the side wall portion 4) of the primary container 2 and so as to accommodate the primary container 2. That is, the secondary container 5 is a container that is larger than the primary container 2.

The cover portion 19 is attachable to and detachable from an opening portion of the secondary container 5 (upper side of the side wall portion 9), and a threaded portion 10 for hermetically sealing the container is formed so as to extend around the circumference of the container.

Note that it is preferable that the synthetic resin material 17 that forms the secondary container 5 have a melting point that is lower than the melting point of the synthetic resin material of the primary container 2.

Next, a method of producing the insert molding container 1 according to the present invention is described with reference to the drawings.

As shown in, for example, FIGs. 2 and 3, the method of producing the insert molding container 1 of the present invention is a method of producing the insert molding container 1 having a primary container 2 that has a bottomed cylinder shape and a secondary container 5 that integrally covers the outer surface of the primary container 2; and having a primary molding step, a surface treatment step, a protection material forming step, and a secondary molding step.

The primary molding step is a step of forming the primary container 2 that has a bottomed cylinder shape. The primary molding step may form the primary container 2 by injection molding. In the primary molding step of the present embodiment, a molten synthetic resin material (such as PET resin) is injected into a primary molding die to form the primary container 2. The primary container 2 of the present embodiment is formed with a wide-mouth bottle shape, and is used as an insert material in the secondary molding step. Note that a circular recessed portion is formed in a bottom-portion outer wall 3a of the primary container 2. The primary container 2 is transferred to the surface treatment step.

In the surface treatment step, a surface coating layer 6 is formed on an outer surface of the primary container 2 for improving the external appearance of the primary container 2 as a cosmetic material container 18. Note that, in the present embodiment, a vapor deposition device is used to perform the surface treatment of forming the glossy vapor deposition layer 6 on the outer surface of the primary container 2. The vapor deposition layer 6 is formed on the bottom-portion outer wall 3a and a side-wall-portion outer wall 4a of the primary container 2. That is, the vapor deposition layer 6 is formed so as to cover an outer side of the primary container 2. The primary container 2 having the vapor deposition layer 6 formed thereon is transferred to the protection material forming step.

In the present invention, the protection material forming step of protecting the vapor deposition layer 6 from, for example, heat of the molten material 17 at the time of secondary injection molding is performed. That is, for the purpose of thermal insulation when forming the secondary container 5, the protection material forming step provides a surface protection material 7 that protects the vapor deposition layer 6 on the vapor deposition layer 6 formed on the primary container 2. In the present embodiment, the surface protection material 7 is provided on the vapor deposition layer 6 formed in a recessed portion of the bottom-portion outer wall 3a of the primary container 2 (see FIG. 4(a)).

The surface protection material 7 is a gel material provided along the shape of the primary container 2 before curing, and, in the present embodiment, ultraviolet curable resin is used as the surface protection material 7. That is, before proceeding to the secondary molding step, the ultraviolet curable resin (the surface protection material 7) is applied to the recessed portion of the bottom-portion outer wall 3a of the primary container 2, is cured by being irradiated with ultraviolet rays, and covers and protects the vapor deposition layer 6. Note that the ultraviolet curable resin is transparent when cured and can maintain the brilliance of the vapor deposition layer 6 without affecting the vapor deposition layer 6.

Since the surface protection material 7 is a fluid, the surface protection material 7 is provided along the shape of the primary container 2, and, when cured, is in surface-contact with and protects the vapor deposition layer 6. The primary container 2 where the vapor deposition layer 6 is protected as a result of curing the surface protection material 7 becomes an insert material of the secondary molding step. In the secondary molding step, the primary container 2 having the surface protection material 7 provided thereon is inserted into the molding die 12 and the molten material 17 is injected between the molding die 12 and the outer surface of the primary container 2 to integrally form the secondary container 5 (secondary injection molding). In the secondary molding step, the molten material 17 (synthetic resin material) is injected from the gate 11 toward the surface protection material 7 formed on the primary container 2.

Specifically, the primary container 2 where the surface protection material 7 is formed on the vapor deposition layer 6 at the recessed portion of the bottom-portion outer wall 3a is as an insert material disposed inside the insert molding die 12 (die). In a state in which the primary container 2 is disposed in the die 12 and is held by the die 12, the surface protection material 7 formed at the bottom-portion outer wall 3a of the primary container 2 is disposed so that is central position opposes the gate 11 (inlet) of the die 12.

The die 12 has a lower die 13 and an upper die 14. The lower die 13 is a split die including a lower left die 13L and a lower right die 13R. The primary container 2 is held by fitting a columnar member 15 (core) provided between the lower left die 13L and the lower right die 13R. Note that the structure of the die 12 is not limited to the exemplified structure. That is, any other structure may be used as long as insert molding can be performed with the primary container 2 as an insert material.

When the primary container 2 provided with the surface protection material 7 is as an insert material disposed inside the die 12 and the die 12 is clamped, a transparent synthetic resin material (molten material 17) for forming the secondary container 5 is injected from the gate 11 toward a cavity 16 formed between the outer surface of the primary container 2 and an inner surface of the die 12, to perform injection molding.

When the injected synthetic resin material 17 is cured inside the cavity 16, the secondary container 5 is integrally formed with the outer side of the primary container 2. Note that a cover portion 19 is attachable to and detachable from an opening portion of the secondary container 5 (upper side of the side wall portion 9), and a threaded portion 10 for hermetically sealing the container is formed so as to extend around the circumference of the container.

The secondary container 5 of the present embodiment is a member having a bottomed cylinder shape formed so as to cover the outer side of the primary container 2. That is, the insert molding container 1 has a double wall structure including the primary container 2 and the secondary container 5 that covers the primary container 2, and has a wide-mouth bottle shape.

Here, since the surface protection material 7 is formed on the vapor deposition layer 6 on the primary container 2 opposing the gate 11, the synthetic resin material 17 that is injected toward the inside of the die 12 from the gate 11 in the insert molding comes into contact with the surface protection material 7 and then flows toward the corners of the inside of the cavity 16. That is, at a bottom portion 3 of the primary container 2 that the gate 11 opposes, the synthetic resin material 17 having a high temperature (the molten material 17) does not directly strike the vapor deposition layer 6.

That is, at the bottom portion 3 of the primary container 2 that the gate 11 opposes, the surface protection material 7 can protect the vapor deposition layer 6 (the primary container 2) from heat and pressure of the molten synthetic resin material 17 injected toward the inside of the die 12 from the gate 11.

In this way, by performing the insert molding in a state in which the surface protection material 7 is formed at a position on the primary container 2 opposing the gate 11 (is formed on the vapor deposition layer 6), it is possible to protect the vapor deposition layer 6 from heat and pressure of the molten synthetic resin material 17 and to prevent peeling of the vapor deposition layer 6 caused by an outer surface in a region of the vicinity of the primary container 2 in front of the gate 11 being melted by the heat of the molten material 17.

Therefore, the insert molding container 1 that has been produced is transparent particularly in the bottom portion 3, and a good external appearance (the brilliance of the vapor deposition layer 6) can be maintained (see the left illustration in FIG. 5). The insert molding container 1 (the primary container 2) accommodates a semisolid cosmetic material or a cosmetic material in paste form.

As shown in FIG. 5, according to the insert molding container 1 and the method of producing the same of the present invention, by disposing the surface protection material 7 onto the surface coating layer 6 (the vapor deposition layer 6) in front of the gate 11, it is possible to prevent peeling of the surface coating layer 6, formed on the outer surface of the primary container 2, caused by heat or pressure of the molten material 17 injected from the gate 11 at the time of secondary molding injection, and to improve the external appearance.

Specifically, according to the insert molding container 1 and the method of producing the same of the present invention, the outer surface of the primary container 2 is embellished by forming the surface coating layer 6 (for example, a glossy layer) thereon by surface treatment, the surface protection material 7 is applied to the surface coating layer 6 in front of the gate 11 and is cured to protect the surface coating layer 6, and then the secondary container 5 is formed at the outer side of the primary container 2, serving as an insert material, by injection molding by using the transparent or semitransparent synthetic resin material 17, as a result of the entire container 1 is provided with a gloss providing transparency and the container 1 conveys a sense of high quality and has designability, and thus such a container 1 can be provided as a cosmetic material container 18. That is, by using the insert molding container 1 of the present invention, such a container 1 can be, as an excellent cosmetic material product, differentiated from other products.

The present invention provides the following operational effects.

Since the vapor deposition layer (the surface coating layer 6) in front of the gate 11 is protected by the surface protection material 7, peeling of the vapor deposition layer 6 caused by the molten synthetic resin material 17 does not occur.

The gate 11 (inlet) into which the molten synthetic resin material 17 is injected may be provided at various positions. For example, the gate 11 may be provided at a position allowing injection toward the side wall portion 4 of the primary container 2. The shape of the die 12 is also not limited. For example, the die 12 can have a wavy shape. That is, the insert molding container 1 having a complex shape can be produced.

By disposing the surface protection material 7 on the vapor deposition layer 6 in front of the gate 11, for example, a stopper member serving as a source of a cover member as in PTL 1 is not required. Therefore, the method can be carried out without providing a dedicated die for producing the stopper member. In addition, a hole portion for positioning the stopper member is not required at the center of the bottom portion 3 of the primary container 2. That is, a desired insert molding container 1 can be produced without increasing the number of steps as in PTL 1.

Since the surface protection material 7 is cured and is formed with a smooth shape, the surface protection material 7 comes into surface-contact with the secondary container 5, and comes into close contact with the secondary container 5 without a gap being formed between the secondary container 5 and the primary container 2, as a result of which the external appearance of the insert molding container 1 after molding is improved.

Note that it is to be understood that the embodiment disclosed this time is illustrative and not restrictive in all aspects.

In particular, in the embodiment disclosed this time, matters that are not clearly expressed, such as working conditions and operational conditions, and the dimensions and weight of structural bodies, do not depart from the scope of ordinary implementation by a person skilled in the art, and are used as matters that can be easily arrived at by any person skilled in the art. Reference Signs List

- 1: insert molding container (accommodation container)
- 2: primary container
- 3: bottom portion
- 3a: bottom-portion outer wall
- 4: side wall portion
- 4a: side-wall-portion outer wall
- 5: secondary container
- 6: surface coating layer (vapor deposition layer)
- 7: surface protection material
- 8: bottom portion
- 9: side wall portion
- 10: threaded portion
- 11: gate
- 12: molding die (die)
- 13: lower die
- 13L: lower left die
- 13R: lower right die
- 14: upper die
- 15: columnar member (core)
- 16: cavity
- 17: molten material
- 18: cosmetic material container
- 19: cover portion
- 100: insert molding container
- 200: primary container
- 500: secondary container
- 600: surface coating layer (vapor deposition layer)

## Claims

1. An insert molding container comprising:
a primary container that is formed with a bottomed cylinder shape and that is used as an insert material;
a surface coating layer that is formed by surface treatment and that covers an outer surface of the primary container;
a surface protection material that is disposed on the surface coating layer and that protects the surface coating layer; and
a secondary container that integrally covers from an outer side the primary container whose outer surface is provided with the surface coating layer and the surface protection material, and that is formed by injecting a molten material toward the surface protection material.

2. The insert molding container according to claim 1,
wherein the surface protection material is disposed at a position opposing a gate into which the molten material for forming the secondary container is injected.

3. The insert molding container according to claim 1 or claim 2, wherein the surface protection material includes a material that is cured before molding the secondary container.

4. The insert molding container according to claim 3,
wherein the surface protection material is a material that is capable of suppressing a temperature of the molten material injected for forming the secondary container from being transferred to the primary container.

5. The insert molding container according to claim 4,
wherein the surface protection material is a gel material provided along a shape of the primary container before curing.

6. The insert molding container according to claim 2,
wherein the surface protection material is disposed at least at a position opposing the gate so as to be situated on the surface coating layer formed on a bottom-portion outer wall of the primary container.

7. A method of producing an insert molding container having a primary container that has a bottomed cylinder shape and a secondary container that integrally covers an outer surface of the primary container, the method comprising:
a primary molding step of forming the primary container;
a surface treatment step of forming a surface coating layer on the outer surface of the primary container;
a protection material forming step of providing the surface protection material according to any one of claims 1 to 6 on the surface coating layer formed on the primary container, the surface protection material protecting the surface coating layer for thermal insulation when forming the secondary container; and
a secondary molding step of integrally forming the secondary container by inserting the primary container provided with the surface protection material into a molding die and by injecting a molten material between the molding die and the outer surface of the primary container,
wherein, in the secondary molding step, the molten material is injected toward the surface protection material provided at the primary container.
